**Europäisches Patentamt**

**European Patent Office**

**Office européen des brevets**

(11) **EP 1 569 369 B1**

(12) **FASCICULE DE BREVET EUROPEEN**

(45) Date de publication et mention
de la délivrance du brevet:
**25.06.2008 Bulletin 2008/26**

(51) Int Cl.:
**H04B 10/213** *(2006.01)*

(21) Numéro de dépôt: **05290268.1**

(22) Date de dépôt: **07.02.2005**

(54) **Réseau de transmission optique en anneau**

Optisches Ringnetzwerk

Optical ring network

(84) Etats contractants désignés:
**AT BE BG CH CY CZ DE DK EE ES FI FR GB GR
HU IE IS IT LI LT LU MC NL PL PT RO SE SI SK TR**

(30) Priorité: **23.02.2004 FR 0450327**

(43) Date de publication de la demande:
**31.08.2005 Bulletin 2005/35**

(73) Titulaire: **Alcatel Lucent
75008 Paris (FR)**

(72) Inventeurs:
• **Zami, Thierry
91300 Massy (FR)**

• **Dupas, Arnaud
91240 St-Michel-Sur-Orge (FR)**

(74) Mandataire: **Korakis-Ménager, Sophie et al
Alcatel Lucent
Intellectual Property & Standards
54 rue La Boétie
75008 Paris (FR)**

(56) Documents cités:
**EP-A- 0 967 752        EP-A- 1 077 552
EP-A- 1 372 281        US-A- 5 712 717**

Printed by Jouve, 75001 PARIS (FR)

**EP 1 569 369 B1**

**Description**

L'invention se situe dans le domaine des réseaux de transmission à liaisons optiques. Elle concerne plus particulièrement les réseaux optiques adaptés à des dimensions géographiques relativement limitées, telles que les réseaux d'accès métropolitains.

D'une façon générale, un réseau optique est constitué d'une pluralité de stations susceptibles d'émettre et de recevoir des signaux optiques à destination et en provenance d'autres stations du réseau. Ces échanges d'informations s'effectuent au moyen de liaisons optiques auxquelles sont connectés des noeuds d'accès qui desservent respectivement ces stations.

Un réseau en anneau de transmission optique selon l'état de la technique est décrit dans EP-A-0 967 752.

Pour exploiter la capacité en bande passante des liaisons optiques, on utilise avantageusement le multiplexage en longueurs d'onde, habituellement appelé "WDM" (de l'anglais "Wavelength Division Multiplexing"). Ainsi, les liaisons optiques véhiculent des signaux multiplex formés d'une combinaison de signaux optiques constitués chacun d'une onde porteuse optique modulée en fonction de l'information à émettre. Chaque onde porteuse possède une longueur d'onde spécifique qui définit un canal spectral correspondant.

Par ailleurs, si le réseau est de taille suffisamment limitée, on peut éviter de prévoir des dispositifs de régénération individuelle des canaux. Un tel réseau qui est alors dit "transparent" peut toutefois comporter des amplificateurs optiques disposés pour amplifier simultanément les canaux des multiplex WDM transmis.

L'invention s'applique à un type de réseau WDM transparent qui en outre utilise une configuration en anneau. Le réseau comporte alors une liaison optique dont une des extrémités est couplée à une interface d'émission d'un concentrateur ("hub" en anglais) et dont l'autre extrémité est couplée à une interface de réception de ce même concentrateur. Le concentrateur est aussi normalement prévu pour communiquer avec un réseau d'interconnexion externe.

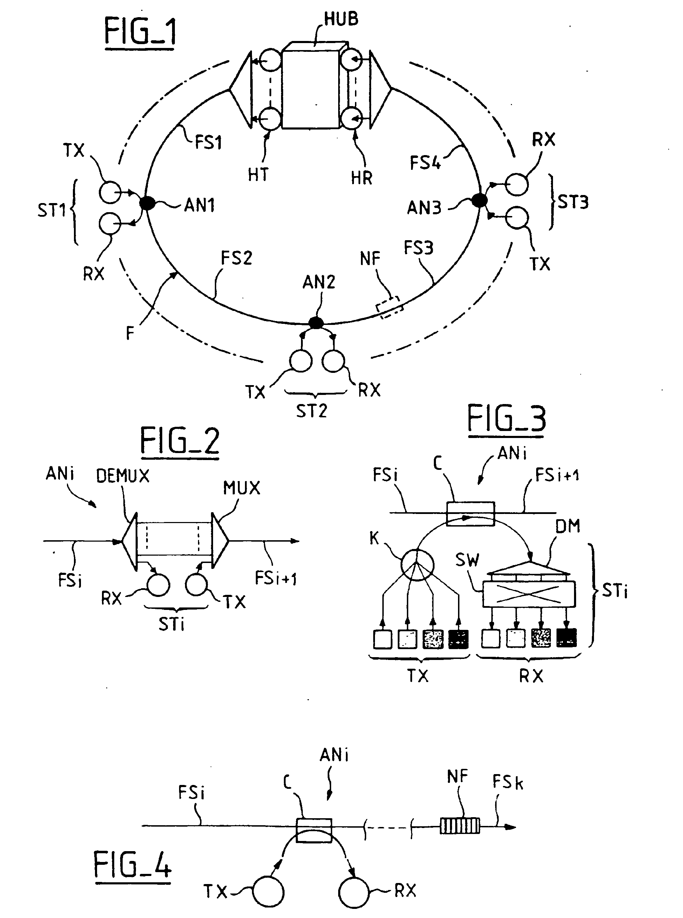

La figure 1 représente schématiquement un exemple de tel réseau dans le cas le plus simple. Selon cet exemple, la liaison disposée en boucle est constituée d'une fibre F sur laquelle sont couplés des noeuds d'accès AN1-AN3 pour des terminaux récepteurs RX et émetteurs TX de stations associées ST1-ST3. La liaison optique est donc constituée de plusieurs tronçons de fibre FS1-FS4 séparés par les noeuds et éventuellement par des amplificateurs optiques (non représentés). La liaison a une première extrémité, dite amont, reliée à l'interface d'émission HT du concentrateur HUB, et une deuxième extrémité, dite aval, reliée à l'interface de réception HR du concentrateur.

L'interface d'émission HT est munie de plusieurs émetteurs utilisant des ondes porteuses de différentes longueurs d'onde d'émission. D'autre part, chaque station comporte au moins un récepteur sélectif en longueur d'onde de réception. Ainsi, chaque émetteur du concentrateur peut injecter dans la liaison un signal de longueur d'onde donnée et lorsque ce signal atteint un noeud d'accès par l'intermédiaire de la fibre, ce signal peut être pris en compte par la station associée si un de ses récepteurs est accordé sur cette longueur d'onde.

Inversement, l'interface de réception HR du concentrateur est munie de plusieurs récepteurs sélectifs en longueurs d'onde de réception respectives, toutes différentes entre elles, et chaque station comporte au moins un émetteur TX de longueur d'onde d'émission donnée. Ainsi, un émetteur d'une station peut injecter dans la liaison un signal de longueur d'onde donnée et lorsque ce signal atteint l'interface de réception, il peut être pris en compte par le concentrateur grâce à un de ses récepteurs sensible à cette longueur d'onde. Il convient toutefois que les longueurs d'onde d'émission des différentes stations soient toutes différentes entre elles pour éviter des interférences et des conflits au niveau de l'interface de réception.

Il convient de noter que compte tenu de la bande passante de la liaison, chaque station pourra comporter en pratique plusieurs récepteurs et plusieurs émetteurs accordés sur plusieurs longueurs d'onde.

Ainsi, les signaux émis par le concentrateur portées par des longueurs d'onde respectives sont aiguillés vers les stations destinataires ayant des récepteurs sensibles à ces longueurs d'onde respectives.

L'ensemble des signaux issus du concentrateur constitue alors sur la liaison un trafic d'informations dit "descendant".

Les échanges d'informations entre stations s'effectuent par l'intermédiaire du concentrateur de la façon suivante. Chaque station émettrice envoi vers le concentrateur un signal porté par une des longueurs d'onde de réception du concentrateur. Ce signal contient une adresse indicative de la station destinataire. Après réception et conversion du signal sous forme électrique par le concentrateur, l'adresse destinataire est prise en compte par les moyens de gestion du réseau pour déterminer une longueur d'onde de réception de la station destinataire. Le signal est alors reconverti sous forme optique au moyen d'une onde porteuse ayant cette longueur d'onde.

L'ensemble des signaux issus des stations constitue alors sur la liaison un trafic d'informations dit "montant". Il est à noter que les signaux des trafics montant et descendant sont en fait véhiculés dans un même sens "amont" vers "aval", c'est-à-dire dans le sens de propagation des signaux depuis les émetteurs du concentrateur ou des stations vers l'extrémité aval de la fibre.

Une façon habituelle de réaliser les noeuds d'accès consiste à utiliser des multiplexeurs d'insertion-extraction ("add-drop multiplexers" en anglais). Un tel élément a pour fonction d'extraire d'un multiplex reçu les canaux ayant les longueurs d'onde de réception réservées à la station considérée.

La figure 2 montre schématiquement une réalisation possible d'un tel multiplexeur d'insertion-extraction pour constituer un noeud d'accès ANi d'une station STi (avec i = 1 à 3).

Il comporte un démultiplexeur DEMUX ayant une entrée et plusieurs sorties, et un multiplexeur MUX ayant plusieurs entrées et une sortie. Les sorties du démultiplexeur sont accordées sur plusieurs bandes de longueurs d'onde disjointes et les entrées du multiplexeur sont accordées respectivement sur ces mêmes bandes de longueurs d'onde. L'ensemble de ces bandes recouvre la totalité du spectre affecté aux canaux prévus pour le réseau. Une des sorties du démultiplexeur est aiguillée vers les récepteurs RX de la station et sert donc à l'extraction des canaux dont les longueurs d'onde sont réservées à la réception de la station considérée. De même, une des entrées du multiplexeur est couplée aux émetteurs TX de la station et sert donc à l'insertion des canaux dont les longueurs d'onde sont réservées à l'émission de la station considérée. Les autres sorties du démultiplexeur sont couplées respectivement aux entrées homologues du multiplexeur.

Comme indiqué précédemment, RX désigne en fait plusieurs récepteurs (non représentés individuellement sur la figure) qui sont sélectifs en longueur d'onde dans la bande de longueurs d'onde de la sortie d'extraction du démultiplexeur. La réception sélective en longueurs d'onde est par exemple réalisée au moyen de photodétecteurs devant lesquels sont placés respectivement des moyens de filtrage appropriés.

Cet ensemble ANi est inséré entre deux tronçons successifs de fibre FSi, FSi+1 de façon à recevoir un multiplex qui matérialise la totalité du trafic parvenant jusqu'en amont du noeud considéré, et à transmettre vers l'aval un multiplex formé des signaux des canaux non extraits ainsi que des signaux émis par la station.

Outre le fait que cette solution à base de démultiplexeur et multiplexeur est relativement coûteuse en particulier si le nombre de bandes est élevé, elle présente l'inconvénient de limiter la flexibilité à l'égard du nombre et du choix des longueurs d'onde de réception et d'émission pouvant être attribuées aux différentes stations. En effet, cette solution implique la réservation pour chaque station de ressources spectrales fixées et identiques aussi bien pour l'extraction que pour l'insertion. Or, en pratique il peut être nécessaire de prévoir pour certaines stations des capacités d'émission très différentes des capacités de réception. Par ailleurs, une bonne flexibilité dans le choix des longueurs d'onde permet une meilleure adaptation aux changements de la répartition du trafic entre les noeuds et le concentrateur.

Enfin, les noeuds d'accès réalisés selon le principe précédent ne sont pas très adaptés pour faire évoluer facilement et économiquement les capacités de réception et d'émission des stations au fur et à mesure de l'augmentation des besoins. En effet, si on veut augmenter le nombre d'utilisateurs connectés aux noeuds, il faut ajouter des récepteurs et des émetteurs dans les stations. Il faut donc aussi intervenir au niveau de la liaison pour remplacer les multiplexeurs d'insertion-extraction par d'autres de plus grande capacité, ou bien prévoir dès l'installation des dispositifs conçus pour supporter une capacité nominale importante qui serait surdimensionnée au début de l'exploitation.

Il existe d'autres types de multiplexeurs d'insertion-extraction à bases de filtres réjecteurs, reconfigurables ou non, tels que celui décrit par exemple dans le brevet américain US 6038045. Ces solutions présentent des limitations analogues du point de vue de la flexibilité dans le nombre et le choix des longueurs d'onde.

Pour pallier à ces limitations il convient d'une manière générale que le noeud permette des couplages entre la liaison et la station associée qui soient non sélectifs en longueurs d'onde, aussi bien pour extraire les signaux multiplex reçus de l'amont que pour injecter vers l'aval sous forme de multiplex les signaux créés dans la station. En d'autres termes, il convient d'utiliser de simples coupleurs d'une part pour prélever sans filtrage une partie de la puissance optique reçue de la liaison, et d'autre part pour y injecter sans filtrage la combinaison des signaux d'émission de la station.

La figure 3 illustre un exemple de réalisation conforme au principe précédent. Le noeud ANi est ici simplement constitué d'un coupleur C de type 2 vers 2. Une première entrée du coupleur est reliée au tronçon amont FSi et une première sortie est reliée au tronçon aval FSi+1.

La station STi comporte un ensemble d'émission constitué de n émetteurs TX (n étant égal à 4 dans l'exemple représenté) dont les sorties sont couplées à des entrées correspondantes d'un coupleur K de type n vers 1 (de type 4 vers 1 dans cet exemple). La sortie du coupleur K est couplée à la seconde entrée du coupleur C. La station STi comporte aussi un ensemble de réception comportant un démultiplexeur DM ayant une entrée couplée à la seconde sortie du coupleur C et m sorties couplées à m photodétecteurs RX (au nombre de 4 dans l'exemple représenté) par l'intermédiaire d'un commutateur spatial SW mxm (4x4 dans cet exemple).

Ainsi, les deux tronçons adjacents FSi, FSi+1 sont couplés entre eux par une première voie du coupleur C, le tronçon amont FSi est couplé à l'ensemble de réception par une seconde voie et l'ensemble d'émission est couplé au tronçon aval FSi+1 par une troisième voie, ces trois voies permettant des couplages non sélectifs en longueurs d'onde.

Par conséquent, en prévoyant des émetteurs TX accordables en longueur d'onde, chaque émetteur peut insérer dans le tronçon aval un signal porté par une longueur d'onde quelconque et le nombre des émetteurs n'est pas limité.

De même, grâce au commutateur SW, chaque photodétecteur peut recevoir l'un quelconque des canaux extraits par le démultiplexeur DM. La capacité effective de réception est déterminée par le nombre de photodétecteurs utilisés, dans la limite de la taille du démultiplexeur DM et on peut faire évoluer facilement cette capacité par ajout de photodétecteurs et/ou par une mise en place d'un démultiplexeur DM plus important, sans perturber le trafic en transit par le noeud. On peut noter que plusieurs stations peuvent prendre en compte un même canal, ceci pour permettre la diffusion d'un même signal vers plusieurs récepteurs de stations différentes.

Cette solution permet une grande flexibilité pour choisir les longueurs d'onde d'émission et de réception. Ce choix est toutefois limité par plusieurs conditions.

Comme pour les solutions précédentes, il faut bien sûr que les longueurs d'onde d'émission utilisées simultanément par l'ensemble des stations soient toutes distinctes.

Il faut aussi que toute longueur d'onde d'émission des stations soit distincte de toute longueur d'onde d'émission du concentrateur. Cette dernière conditions conduit à définir parmi l'ensemble des longueurs d'onde utilisables dans le réseau (par exemple la bande C selon la norme ITU) deux sous-ensembles disjoints de longueurs d'onde regroupant respectivement des longueurs d'onde réservées aux émetteurs du concentrateur et des longueurs d'onde réservées aux émetteurs des stations, c'est-à-dire deux sous-ensembles de longueurs d'onde de canaux affectées respectivement aux trafics descendant et montant.

Or, si on analyse l'évolution statistique de l'utilisation des canaux le long de la liaison en partant de son extrémité amont (en sortie de l'interface d'émission du concentrateur), on constate statistiquement que le nombre de longueurs d'onde du concentrateur qui conservent une utilité diminue au fur et à mesure que l'on se déplace de noeud en noeud vers l'aval, c'est-à-dire que l'on se rapproche de l'interface de réception d'un concentrateur.

Ceci signifie que l'ensemble des ressources spectrales du réseau n'est pas utilisé de façon optimale.

Compte tenu des remarques qui précèdent, un but de l'invention est d'optimiser dans un tel réseau l'utilisation des ressources spectrales. Dans ce but, l'invention a pour objet un réseau de transmission optique comprenant une liaison optique en anneau et un concentrateur ayant une interface d'émission et une interface de réception, une première extrémité, dite amont, de ladite liaison étant reliée à ladite interface d'émission, et une seconde extrémité, dite aval, de ladite liaison étant reliée à ladite interface de réception, l'interface d'émission étant munie d'émetteurs optiques aptes à produire des signaux optiques dits "descendants" portés par des longueurs d'onde respectives, l'interface de réception étant munie de récepteurs optiques aptes à détecter des signaux optiques dits "montants" issus de ladite seconde extrémité, ladite liaison étant subdivisée en plusieurs tronçons séparés par des noeuds d'accès pour des récepteurs optiques et des émetteurs optiques de stations associées, lesdits émetteurs (TX) de stations étant aptes à produire lesdits signaux optiques montants portés par des longueurs d'onde respectives, lesdits récepteurs optiques étant aptes à détecter des signaux optiques descendants sélectivement en fonction de leurs longueurs d'onde respectives, chaque noeud d'accès comportant des moyens de couplage aptes à coupler tout signal optique issu du tronçon situé en amont du noeud vers le tronçon situé en aval du noeud et vers les récepteurs de la station associée, et aptes à coupler tout signal optique issu desdits émetteurs de la station associée vers le tronçon situé en aval du noeud, ces couplages étant non sélectifs en longueur(s) d'onde, lesdits signaux optiques descendants étant portés par des longueurs d'onde appartenant à un premier ensemble de longueurs d'onde prédéfinies, caractérisé en ce qu'un filtre réjecteur est inséré dans au moins un tronçon de ladite liaison séparant deux noeuds adjacents, en ce que ce filtre réjecteur est prévu pour rejeter une partie des longueurs d'onde dudit premier ensemble, et en ce que des émetteurs optiques de stations associées à des noeuds situés en aval dudit tronçon sont aptes à produire des signaux optiques montants portés respectivement par des longueurs d'onde rejetées par ledit filtre réjecteur.

L'avantage de cette solution est que le nombre total de longueurs d'onde utilisables par le réseau est augmenté puisque certaines des longueurs d'onde initialement affectées au trafic descendant en sortie de l'interface d'émission du concentrateur peuvent être réutilisées pour le trafic montant en aval d'un filtre qui rejète ces longueurs d'onde.

Par ailleurs, même si l'introduction de filtres limite certains choix de longueurs d'onde pour porter le trafic descendant, la flexibilité est améliorée pour ce qui concerne le nombre global des longueurs d'onde attribuables dans le réseau.

D'autres aspects et avantages de l'invention apparaîtront à la suite de la description en référence aux figures.

- La figure 1 commentée précédemment représente un exemple de réseau d'accès métropolitain auquel l'invention peut s'appliquer.
- La figure 2 commentée précédemment représente un exemple de réalisation de noeud d'accès selon l'état de la technique.
- La figure 3 commentée précédemment représente un exemple de réalisation de noeud d'accès utilisable dans un réseau où l'invention s'applique avantageusement.
- La figure 4 illustre schématiquement la mise en oeuvre de l'invention.

Compte tenu des explications qui précèdent, la mise en oeuvre pratique de l'invention ne pose pas de difficultés particulières. En effet, comme schématisé sur la figure 4, elle consiste simplement à insérer dans un ou plusieurs tronçons de fibre FSk des filtres réjecteurs NF accordés sur certaines des longueurs d'onde appartenant à l'ensemble de longueurs d'onde réservées à l'émission de signaux par le concentrateur. Ces filtres peuvent utiliser diverses technologies disponibles (filtre à réseau de Bragg inscrit dans une fibre par exemple).

Pour une bonne utilisation des ressources spectrales, il convient de prévoir une pluralité de filtres réjecteurs NF, ces filtres rejetant respectivement des bandes de longueurs d'onde disjointes deux à deux.

Pour des raisons de coût, il est préférable d'utiliser des filtres réjecteurs de bande continue classiques, ce qui implique que les longueurs d'onde réservées à l'émission de signaux par le concentrateur seront de préférence adjacentes et que les bandes de réjection des filtres recouvrent chacune aussi des longueurs d'onde adjacentes.

En outre, on pourra simplifier la gestion et les commandes des sources accordables des stations par les dispositions suivantes.

Les longueurs d'onde réservées à l'émission de signaux par le concentrateur constituent un premier ensemble de longueurs d'onde adjacentes prédéfinies tel que les signaux optiques descendants soient portés par des longueurs d'onde appartenant à ce premier ensemble. D'autre part, on choisit un second ensemble de longueurs d'onde adjacentes prédéfinies tel que les émetteurs TX de la station la plus proche de l'extrémité amont de la liaison soient aptes à produire des signaux optiques montants portés par des longueurs d'onde appartenant à ce second ensemble. Ensuite, ces premier et second ensembles sont choisis tels qu'ils constituent respectivement des bandes adjacentes de longueurs d'onde. Dans ces conditions, les filtres réjecteurs disposés le long de la liaison étant au nombre de P et numérotés par nombres croissants 1 à P depuis l'extrémité amont vers l'extrémité aval de la liaison, pour tout nombre q compris entre 1 et P-1, les filtres numérotés q et q+1 sont choisis pour rejeter des bandes adjacentes de longueurs d'onde.

Cette façon d'organiser les longueurs d'onde et les bandes de réjection des filtres à pour effet de minimiser les plages d'accordabilité à prévoir pour les émetteurs des stations.

Le nombre de filtres à prévoir et le nombre de canaux rejetés respectivement par les filtres dépendra en fait des caractéristiques de trafic du réseau considéré.

Un cas particulier est celui où les trafics en émission et en réception de chaque station sont supposés équilibrés. Une règle de dimensionnement possible dans le cas où on prévoit un filtre par tronçon est la suivante.

N étant le nombre de noeuds du réseau et M le nombre total de canaux prévus dans le réseau, si on attribue à la première station la possibilité d'émettre sur X longueurs d'onde, le premier ensemble de longueurs d'onde attribuable au trafic descendant pourra comporter jusqu'à M-X longueurs d'onde en sortie du concentrateur.

L'hypothèse de trafics équilibrés en émission et en réception impose que chaque filtre rejète un même nombre dM de longueurs d'onde et que le concentrateur après la dernière station ait la possibilité de recevoir M-X longueurs d'onde. On en déduit : M-X = X + (N-1)dM, d'où :

$$dM = (M-2X)/(N-1)$$

On voit que cela impose X<M/2. Si la valeur de dM obtenue n'est pas un entier, on pourra choisir des filtres dont les nombres de canaux rejetés sont arrondis par valeurs inférieure et supérieure, et placés alternativement de long de la liaison de l'amont vers l'aval.

Par exemple dans le cas où M = 32, N = 9 et X = 8, on obtient dM = 2 et la répartition suivante :

| | Noeud 1 | Noeud 2 | Noeud 3 | Noeud 4 | Noeud 5 | Noeud 6 | Noeud 7 | Noeud 8 | Noeud 9 |
|---|---|---|---|---|---|---|---|---|---|
| Nombre de canaux pour le trafic descendant | 24 | 22 | 20 | 18 | 16 | 14 | 12 | 10 | 8 |
| Nombre de canaux pour le trafic montant | 8 | 10 | 12 | 14 | 16 | 18 | 20 | 22 | 24 |

L'introduction de filtres a bien sûr des conséquences sur le choix des longueurs d'onde pour porter le trafic descendant et le trafic montant. Aussi, les moyens de gestion du réseau normalement prévus pour sélectionner les longueurs d'onde portant les signaux optiques descendants et montants doivent prendre en compte cet aspect.

Avantageusement, ces moyens seront aussi conçus pour optimiser le choix des longueurs d'onde en fonction des emplacements des filtres et des longueurs d'onde qu'ils rejètent pour maximiser la flexibilité, c'est-à-dire les nombres des longueurs d'onde de réception et d'émission possibles au niveau de chaque station.

Pour le trafic descendant, il est d'abord souhaitable de choisir si possible en priorité une longueur d'onde qui est rejetée le plus en amont, de façon à laisser libre les longueurs d'onde descendantes qui vont vers les noeuds les plus en aval et pour lesquels le choix en longueur d'onde est par nature plus restreint.

Aussi, selon l'invention, si pour porter un signal optique descendant destiné à au moins une station associée à au moins un noeud donné il existe plusieurs longueurs d'onde possibles, les moyens de gestion sont prévus pour sélectionner une longueur d'onde rejetée par un filtre situé en aval de ce noeud donné, mais situé le plus en amont possible sur la liaison.

Parallèlement, pour le trafic montant, on choisira si possible en priorité une longueur d'onde qui a été "libérée" du trafic descendant le plus en aval possible pour laisser disponibles des longueurs d'onde pouvant être émises le plus en amont possible, là où le nombre de longueurs d'onde possibles pour le trafic montant est plus restreint.

Aussi, également selon l'invention, si pour porter un signal optique montant produit par une station associée à un noeud donné il existe plusieurs longueurs d'onde possibles, les moyens de gestion sont prévus pour sélectionner une longueur d'onde rejetée par un filtre situé en amont de ce noeud donné, mais situé le plus en aval possible sur la liaison.

L'invention n'est pas limitée aux seuls modes de réalisation décrits ci-dessus. En particulier, on pourrait utiliser des filtres réjecteurs accordables afin d'offrir en cas de besoin des possibilités supplémentaires d'optimisation.

Les moyens de couplage C non sélectifs en longueur d'onde pourraient être mis en oeuvre de diverses façons, mais un coupleur directionnel de type 2 vers 2 constitue une bonne solution, avantageuse en termes de coût et de pertes optiques.

Bien entendu, l'invention peut s'appliquer aussi bien à des réseaux passifs qu'à des réseaux ayant des liaisons munies d'amplificateurs.

## Revendications

1. Réseau de transmission optique comprenant une liaison optique (F) en anneau et un concentrateur (HUB) ayant une interface d'émission (HT) et une interface de réception (HR), une première extrémité, dite amont, de ladite liaison étant reliée à ladite interface d'émission (HT), et une seconde extrémité, dite aval, de ladite liaison étant reliée à ladite interface de réception (HR), l'interface d'émission (HT) étant munie d'émetteurs optiques aptes à produire des signaux optiques dits "descendants" portés par des longueurs d'onde respectives, l'interface de réception (HR) étant munie de récepteurs optiques aptes à détecter des signaux optiques dits "montants" issus de ladite seconde extrémité, ladite liaison étant subdivisée en plusieurs tronçons (FS1-FS4) séparés par des noeuds d'accès (AN1-AN3) pour des récepteurs optiques (RX) et des émetteurs optiques (TX) de stations associées (ST1-ST3), lesdits émetteurs (TX) de stations étant aptes à produire lesdits signaux optiques montants portés par des longueurs d'onde respectives, lesdits récepteurs optiques (RX) étant aptes à détecter des signaux optiques descendants sélectivement en fonction de leurs longueurs d'onde respectives, chaque noeud d'accès (ANi) comportant des moyens de couplage (C) aptes à coupler tout signal optique issu du tronçon (FSi) situé en amont du noeud vers le tronçon (FSi+1) situé en aval du noeud (ANi) et vers les récepteurs de la station associée (STi), et aptes à coupler tout signal optique issu desdits émetteurs (TX) de la station associée (STi) vers le tronçon (FSi+1) situé en aval du noeud (ANi), ces couplages étant non sélectifs en longueur(s) d'onde, lesdits signaux optiques descendants étant portés par des longueurs d'onde appartenant à un premier ensemble de longueurs d'onde prédéfinies, **caractérisé en ce qu'**un filtre réjecteur (NF) est inséré dans au moins un tronçon de ladite liaison séparant deux noeuds adjacents, **en ce que** ce filtre réjecteur (NF) est prévu pour rejeter une partie des longueurs d'onde dudit premier ensemble, et **en ce que** des émetteurs optiques (TX) de stations associées à des noeuds situés en aval dudit tronçon sont aptes à produire des signaux optiques montants portés respectivement par des longueurs d'onde rejetées par ledit filtre réjecteur (NF).

2. Réseau selon la revendication 1, **caractérisé en ce qu'**il comporte une pluralité de filtres réjecteurs (NF) prévus pour rejeter respectivement des bandes de longueurs d'onde disjointes deux à deux.

3. Réseau selon la revendication 2, **caractérisé en ce que** les longueurs d'onde dudit premier ensemble sont adjacentes et **en ce que** lesdites bandes recouvrent chacune des longueurs d'onde adjacentes.

4. Réseau selon la revendication 3, **caractérisé en ce que** les émetteurs (TX) de la station la plus proche de l'extrémité amont de la liaison sont aptes à produire des signaux optiques montants portés par des longueurs d'onde appartenant à un second ensemble de longueurs d'onde adjacentes prédéfinies, **en ce que** lesdits premier et second ensembles constituent respectivement des bandes adjacentes de longueurs d'onde, et **en ce que** lesdits filtres réjecteurs disposés le long de la liaison étant au nombre de P et numérotés par nombres croissants 1 à P depuis l'extrémité amont vers l'extrémité aval de la liaison, pour tout nombre q compris entre 1 et P-1, les filtres numérotés q et q+1 rejètent des bandes adjacentes de longueurs d'onde.

**5.** Réseau selon l'une des revendications 2 à 4, ce réseau comportant des moyens de gestion du réseau pour sélectionner les longueurs d'onde portant lesdits signaux optiques descendants, **caractérisé en ce que** si pour porter un signal optique descendant destiné à au moins une station associée à au moins un noeud donné il existe plusieurs longueurs d'onde possibles, lesdits moyens de gestion sont prévus pour sélectionner une longueur d'onde rejetée par un filtre situé en aval dudit noeud donné, mais situé le plus en amont possible sur ladite liaison.

**6.** Réseau selon l'une des revendications 2 à 5, ce réseau comportant des moyens de gestion du réseau pour sélectionner les longueurs d'onde portant lesdits signaux optiques montants, **caractérisé en ce que** si pour porter un signal optique montant produit par une station associée à un noeud donné il existe plusieurs longueurs d'onde possibles, lesdits moyens de gestion sont prévus pour sélectionner une longueur d'onde rejetée par un filtre situé en amont dudit noeud donné, mais situé le plus en aval possible sur ladite liaison.

**7.** Réseau selon l'une des revendications 1 à 6, **caractérisé en ce que** lesdits moyens de couplage (C) non sélectifs en longueur(s) d'onde sont constitués d'un coupleur directionnel de type 2 vers 2.

## Claims

**1.** An optical transmission network comprising a ring optical link (F) and a concentrator (HUB) having a send interface (HT) and a receive interface (HR), wherein a first, upstream end of said link is connected to said send interface (HT) and a second, downstream end of said link is connected to said receive interface (HR), the send interface (HT) comprises optical senders able to produce "downlink" optical signals carried by respective wavelengths, the receive interface (HR) comprises optical receivers able to detect "uplink" optical signals coming from said second end, said link is subdivided into a plurality of segments (FS1-FS4) separated by access nodes (AN1-AN3) for optical receivers (RX) and optical senders (TX) of associated stations (ST1-ST3), said station senders (TX) able to produce said uplink optical signals carried by respective wavelengths, said optical receivers (RX) able to detect downlink optical signals selectively as a function of their respective wavelengths, each access node (ANi) comprises coupling means (C) able to couple any optical signal coming from the segment (FSi) on the upstream side of the node to the segment (FSi+1) on the downstream side of the node (ANi) and to the receivers of the associated station (STi) and to couple any optical signal coming from said senders (TX) of the associated station (STi) to the segment (FSi+1) on the downstream side of the node (ANi), which couplings are not wavelength-selective, and said downlink optical signals are carried by wavelengths belonging to a first set of predefined wavelengths, which network is **characterized in that** a rejection filter (NF) is inserted into a segment of said link between two adjacent nodes, said rejection filter (NF) rejects a portion of the wavelengths of said first set, and optical senders (TX) of stations associated with nodes on the downstream side of said segment produce uplink optical signals carried by respective wavelengths rejected by said rejection filter (NF).

**2.** A network according to claim 1, **characterized in that** it comprises a plurality of rejection filters (NF) that reject respective non-adjacent bands of wavelengths.

**3.** A network according to claim 2, **characterized in that** the wavelengths of said first set are adjacent and **in that** said bands cover adjacent wavelengths.

**4.** A network according to claim 3, **characterized in that** the senders (TX) of the station nearest the upstream end of the link produce uplink optical signals carried by wavelengths belonging to a second set of predefined adjacent wavelengths, said first and second sets constitute respective adjacent bands of wavelengths, and there are P rejection filters disposed along the link numbered from 1 to P in increasing order from the upstream end to the downstream end of the link, for any number q from 1 to P - 1, the filters q and q + 1 rejecting adjacent bands of wavelengths.

**5.** A network according to any one of claims 2 to 4, comprising network management means for selecting the wavelengths carrying said downlink optical signals, **characterized in that**, if there is a plurality of wavelengths available to carry a downlink optical signal addressed to a station associated with a given node, said management means select a wavelength rejected by a filter on the downstream side of said given node but situated as close as possible to the upstream end of said link.

**6.** A network according to any one of claims 2 to 5, comprising network management means for selecting the wavelengths carrying said uplink optical signals, **characterized in that** if there is a plurality of wavelengths available to carry an uplink optical signal produced by a station associated with a given node, said management means select a wavelength rejected by a filter on the upstream side of said given node but situated as close as possible to the downstream end of said link.

7. A network according to any one of claims 1 to 6, **characterized in that** said coupling means (C) that are not wavelength-selective consist of a 2-to-2 directional coupler.


**Patentansprüche**

1. Optisches Netzwerk beinhaltend eine ringförmige optische Verbindung (F) und einen Konzentrator (HUB) mit einer Sendeschnittstelle (HT) und einer Empfangsschnittstelle (HR), wobei ein erstes so genanntes vorgelagertes Ende dieser Verbindung mit dieser Sendeschnittstelle (HT) verbunden ist und ein zweites so genanntes nachgelagertes Ende dieser Verbindung mit dieser Empfangsschnittstelle (HR) verbunden ist, wobei die Sendeschnittstelle (HR) mit optischen Sendern ausgestattet ist, die fähig sind, so genannte "absteigende" optische Signale zu erzeugen, die von betreffenden Wellenlängen getragen werden, und wobei die Empfangsschnittstelle (HR) mit optischen Empfängern ausgestattet ist, die in der Lage sind, so genannte "aufsteigende" optische Signale zu erfassen, die von diesem zweiten Ende stammen, wobei diese Verbindung in mehrere Abschnitte (FS1-FS4) unterteilt ist, die durch Zugangsknoten (AN1-AN3) für optische Empfänger (RX) und optische Sender (TX) von zugehörigen Stationen (ST1-ST3) getrennt sind, wobei diese Sender (TX) von Stationen im Stande sind, diese aufsteigenden optischen Signale, die von betreffenden Wellenlängen getragen werden, zu erzeugen, und wobei diese optischen Empfänger (RX) in der Lage sind, absteigende optische Signale selektiv abhängig von ihren jeweiligen Wellenlängen zu erkennen, wobei jeder Zugangsknoten (ANi) Mittel zur Kopplung (C) einschließt, die in der Lage sind, jedwedes optische Signal, das von dem Abschnitt (FSi) stammt, der oberhalb des Knotens gelegen ist, hin zum Abschnitt (FSi+1) zu koppeln, der unterhalb des Knotens (ANi) gelegen ist und hin zu den Empfängern der zughörigen Station (STi), und im Stande, jedwedes optische Signal, das von diesen Sendern (TX) der zugehörigen Station (STi) stammt, hin zum Abschnitt (FSi+1) zu koppeln, der unterhalb des Knotens (ANi) liegt, wobei diese Kopplungen nicht wellenlängenselektiv sind, diese absteigenden optischen Signale von Wellenlängen getragen werden, die zu einem ersten Komplex von vordefinierten Wellenlängen gehören, **dadurch gekennzeichnet, dass** ein Sperrfilter (NF) in mindestens einen Abschnitt dieser Verbindung eingefügt wird, der zwei benachbarte Knoten trennt, **dadurch gekennzeichnet, dass** dieses Sperrfilter (NF) dafür vorgesehen ist, einen Teil der Wellenlängen dieses ersten Komplexes zurück zu weisen, und **dadurch gekennzeichnet, dass** optische Sender (TX) von Stationen, die mit Knoten verknüpft sind, die unterhalb dieses Abschnitts liegen, in der Lage sind, aufsteigende optische Signale zu erzeugen, die jeweils von Wellenlängen getragen werden, welche von diesem Sperrfilter (NF) zurückgewiesen werden.

2. Netzwerk gemäß Anspruch 1, **dadurch gekennzeichnet, dass** es eine Vielzahl von Sperrfiltern (NF) einschließt, die dafür vorgesehen sind, jeweils paarweise getrennte Wellenlängenbänder zurück zu weisen.

3. Netzwerk gemäß Anspruch 2, **dadurch gekennzeichnet, dass** die Wellenlängen dieses ersten Komplexes nebeneinander liegend sind und **dadurch gekennzeichnet, dass** diese Bänder jeweils nebeneinander liegende Wellenlängen abdecken.

4. Netzwerk gemäß Anspruch 3, **dadurch gekennzeichnet, dass** die Sender (TX) der Station, die dem vorgelagerten Ende der Verbindung am nächsten ist, im Stande sind, aufsteigende optische Signale zu erzeugen, die von Wellenlängen getragen werden, die zu einem zweiten Komplex von vordefinierten nebeneinander liegenden Wellenlängen gehören, **dadurch gekennzeichnet, dass** dieser erste und dieser zweite Komplex jeweils nebeneinander liegende Wellenlängenbänder bilden und **dadurch gekennzeichnet, dass** diese Sperrfilter, die entlang der Verbindung angeordnet sind, die Anzahl P haben und ab dem vorgelagerten Ende der Verbindung bis zum nachgelagerten Ende der Verbindung mit ansteigenden Zahlen 1 bis P nummeriert sind, für jedwede Zahl q zwischen 1 und P-1, wobei die Filter mit den Nummern q und q+1 nebeneinander liegende Wellenlängenbänder zurückweisen.

5. Netzwerk gemäß einem der Ansprüche 2 bis 4, wobei dieses Netzwerk Mittel zur Verwaltung des Netzwerks einschließt, um die Wellenlängen auszuwählen, die diese absteigenden optischen Signale tragen, **dadurch gekennzeichnet, dass** falls es mehrere mögliche Wellenlängen gibt, um ein absteigendes optisches Signal zu tragen, das für mindestens eine Station bestimmt ist, die mit mindestens einem bestimmten Knoten verknüpft ist, diese Mittel zur Verwaltung dafür vorgesehen sind, eine Wellenlänge auszuwählen, die von einem Filter zurück gewiesen wird, das diesem bestimmten Knoten nachgelagert ist, jedoch auf dieser Verbindung möglichst weit vorgelagert ist.

**6.** Netzwerk gemäß einem der Ansprüche 2 bis 5, wobei dieses Netzwerk Mittel zur Verwaltung des Netzwerks einschließt, um die Wellenlängen auszuwählen, welche diese aufsteigenden optischen Signale tragen, **dadurch gekennzeichnet, dass** falls es mehrere mögliche Wellenlängen gibt, um ein aufsteigendes optisches Signal zu tragen, das von einer Station erzeugt wird, die mit einem bestimmten Knoten verknüpft ist, diese Mittel zur Verwaltung dafür vorgesehen sind, eine Wellenlänge auszuwählen, die von einem Filter zurück gewiesen wird, das diesem bestimmten Knoten vorgelagert ist, jedoch auf dieser Verbindung möglichst weit nachgelagert ist.

**7.** Netzwerk gemäß einem der Ansprüche 1 bis 6, **dadurch gekennzeichnet, dass** diese Mittel zur nicht wellenlängenselektiven Kopplung (C) aus einem Richtkoppler vom Typ 2 zu 2 bestehen.

## FIG_1

## FIG_2

## FIG_3

## FIG_4

**EP 1 569 369 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0967752 A

- US 6038045 A